# EUROPEAN PATENT APPLICATION

(11) **EP 1 162 768 A1**
(43) Date of publication of application: **12.12.2001**
(21) Application number: 00440171.7
(22) Date of filing: 09.06.2000
(51) Int. Cl.: H04B 10/17, H04J 14/02, H01S 3/067

(54) **System and method for amplifying a WDM signal including a Raman amplified Dispersion-compensating fibre**

(71) Applicant: ALCATEL, 75008 Paris (FR)
(72) Inventor: Desthieux, Bertrand, 75015 Paris (FR); Sotom, Michel, 31000 Toulouse (FR)
(74) Representative: Rausch, Gabriele, Dr.

(57) **Abstract**

An amplifier unit for a wavelength-division multiplex transmission system is proposed that has a first optical amplifier (2), a second optical amplifier (3) and a connection present between the amplifiers. The amplifier unit contains a fiber section made of a dispersion-compensating fiber (5), said dispersion-compensating fiber being pumped by at least one pump light source and being used as Raman amplifier. The optical amplification of the dispersion-compensating fiber overcompensates for the loss in the connection between the amplifiers. The connection can be a wavelength add-drop multiplexer (wadm) for instance.

## Description

### Prior art

The invention proceeds from an amplifier unit for a wavelength-division multiplex transmission system having a first optical amplifier, a second optical amplifier and a connection present between the amplifiers, and also a fiber section made of a dispersion-compensating fiber, the dispersion-compensating fiber being pumped by at least one pump light source and being used as Raman amplifier.

Furthermore, the invention is concerned with a method for amplifying optical signals for transmission over a glass-fiber transmission link, the signal entering from the transmission link traversing a first optical amplifier, the amplified signal traversing an add-drop module and then being compensated by a dispersion-compensating fiber and simultaneously amplified using the Raman effect in order then to traverse a second optical amplifier.

Optical wavelength-division multiplex (WDM) transmission systems are known in the prior art. They offer a good glass-fiber bandwidth utilization efficiency as a result of optical wavelength-division multiplexing (WDM). Under these circumstances, a number of modulated optical carriers whose frequency differs are transmitted simultaneously in a glass fiber. A separate laser is provided at the transmitting end for each channel. The optical signals of all the lasers are launched into a glass fiber with the aid of frequency-dependent coupling arrangements. The wavelengths are focused and also decoupled via an optical multiplexer or demultiplexer. In a network structure that uses wavelength-division multiplexing, optical add-drop modules are necessary at the network nodes for launching and extracting individual wavelength channels. The typical physical network structure containing optical add-drop modules is the WDM ring network, which comprises a plurality of add-drop modules and central node that makes possible accesses to switching centres and other service providers. Ring networks can operate in a unidirectional or bidirectional manner. At the same time, the purpose of a network node in a WDM ring network is not only to provide an optical add-drop module, but also to amplify and possibly regenerate the optical signal. Network nodes therefore generally contain means that serve to amplify the optical signal. In this connection, EDFA (erbium-doped fiber amplifiers), in particular, are used for the amplification. Furthermore, compensation for the dispersion effects that are caused by the transmitting fibers is undertaken in the transmission system. Here, dispersion-compensating fibers (DCF) are used. The dipersion compensating effect can be a negative or positive compensation. The negative dispersion, for example, is achieved by a special refractive-index profile in the fibers. For example, the highly doped core may be surrounded by a ring having reduced refractive index and then by an undoped quartz sheath. However, the fiber attenuation increases as a result of the high dopant concentration in the core material. Dispersion coefficients of -60 ps/(nm*km) are quoted as typical values. The DCFs are interconnected with standard monomode fibers and, in doing so, the sublengths are chosen so that a value of below 1 ps/km*nm results as the mean dispersion coefficient.

In the prior art, it is known, for example, from the article entitled "Roman Amplification for loss Compensation ...." by Hansen et al., Electronic Letters, 1998, Volume 34, Number 11, page 1136, to use Raman amplification to compensate for the loss in a DCF. In this connection, the objective is to utilize the Raman effect in order to obtain loss-free DCF sections. The Raman amplification of DCFs is high since the fibers have a small mode field diameter. As a result, the pump output is very efficiently launched. In a Raman amplifier, a coherent scattering of pump light is achieved by the Raman effect in a more highly energetic energy level of the excited material. This so-called anti-Stokes scattering in a higher energy level makes it possible to pump a Raman amplifier with a wavelength 100 nm below the signal wavelengths in the region of 1500 nm and nevertheless to emit the signal wavelength. As a result of the scattering of light at excited oscillation levels in the fiber, a Raman-amplified light signal is emitted in the wavelength range of the signal wavelength. In the prior art, this effect compensates for the loss in the DCF.

An amplification module is also disclosed in US Patent 5,887,093. The module proposed here compensates for the losses in a DCF.

### Advantages of the invention

The amplifier unit according to the invention having a first optical amplifier (2), a second optical amplifier (3) and a connection (10) present between the amplifiers, and also a fiber section (5) made of a dispersion-compensating fiber, the dispersion-compensating fiber (5) being pumped by at least one pump light source (6) and being used as Raman amplifier has, on the other hand, the advantage that a complete module comprising amplifiers and dispersion-compensating fiber is proposed, the amplifier unit being optimized by the different amplifier stages and also by the Raman-amplifier stage in the dispersion-compensating fiber and the loss in the dispersion-compensating fiber is at least overcompensated for.

The measures cited in the subclaims make possible advantageous developments and improvements of the amplifier unit specified in the independent claim. It is particularly advantageous that the integral amplification curve of the amplifier unit is optimized by the combination of amplifiers and a Raman amplifier. Advantageously, the loss in an optical add-drop module is also compensated for in the amplifier unit.

### Drawing

An exemplary embodiment of the invention is shown in the drawing and explained in greater detail in the description below. In the drawing:
Figure 1 shows a diagrammatic representation of the amplifier unit,
Figure 2 shows a first embodiment of the amplifier unit,
Figure 3 shows a second embodiment of the amplifier unit
Figure 4 shows a third embodiment of the amplifier unit and
Figure 5 shows a diagram of a Raman amplifier.

### Description

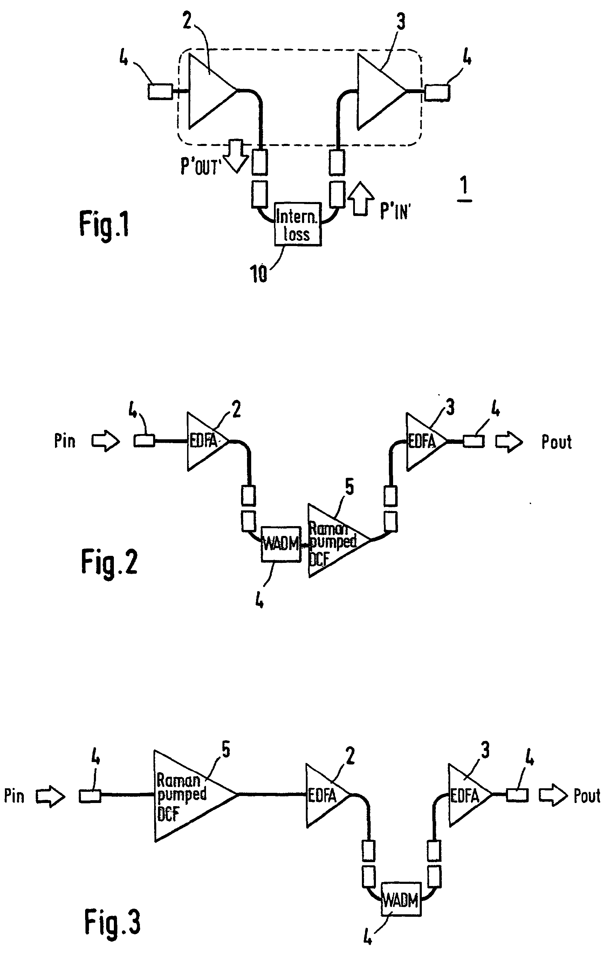

Figure 1 shows the diagrammatic structure of an amplifier unit 1. The light arriving from the transmission link is launched into the amplifier unit 1 by means of an isolator 4. The isolator 4 is connected to the input of a first amplifier 2. The output of the first amplifier 2 is connected to the input of a second amplifier 3. The output of the second amplifier 3 is connected to the next section of the transmission link of the transmission network via a further isolator 4. Between the output of the first amplifier 2 and the input of the second amplifier 3 is a connection 10 in which various components are diagrammatically indicated. Said components jointly generate an internal loss. This loss between P'ₒᵤₜ and P'ᵢₙ may be for example 9 dB. The loss in the amplifier unit means not only a power reduction, but also an increase in the transmission-link noise.

Figure 2 shows an amplifier unit according to the invention. The optical signal Pᵢₙ arriving from the transmission link is launched into the first amplifier 2 via the isolator 4. The output of the first amplifier 2 is connected to an add-drop module 4. The add-drop module 4 is connected to a Raman-pumped DCF section. The output of the Raman-pumped DCF section is connected to the input of the second amplifier 3. The output signal Pₒᵤₜ is launched into the transmission link via further isolator 4. In this embodiment, the internal connecting link between the two amplifiers 2 and 3 is subject to two optical loss factors. The first component subject to loss is the add-drop module and the second component is the DCF. In the amplifier unit, the Raman-amplified signal of the DCF fiber serves not only to compensate for the losses in the DCF, but also to compensate for the losses in the optical add-drop module and also, overall, in the transmission link between the amplifiers 2 and 3. The amplifiers 2 and 3 are EDFAs that are connected via couplers to pump light sources. Their precise design is not the subject of the invention. The suitable EDFAs are therefore pumped in or against the signal direction and used with at least one pump light source. Multistage EDFAs are also advantageous as amplifiers.

Figure 3 shows a further embodiment of the amplifier unit 1 according to the invention. In this embodiment, the Raman-amplifier 5 is connected upstream of the first amplifier 2.

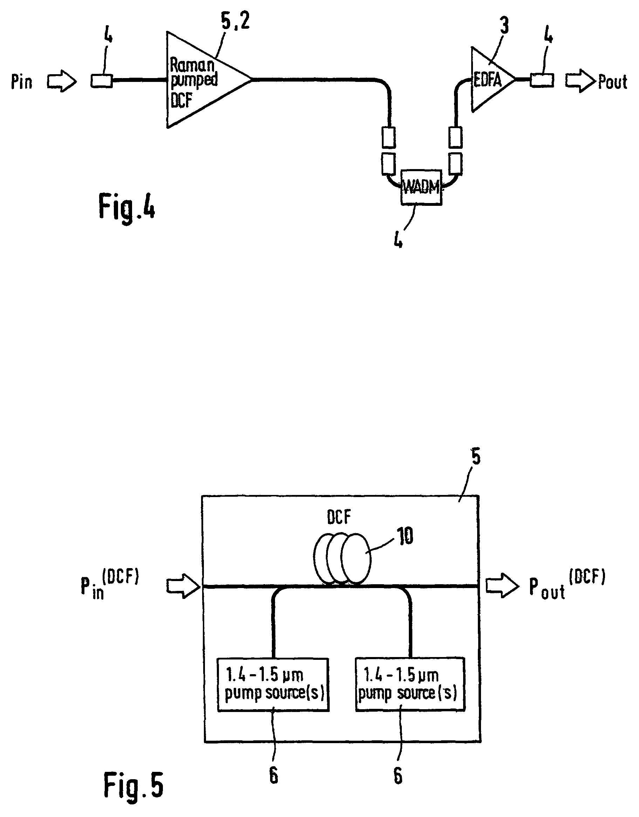

Figure 4 shows an amplifying unit with a first amplifier which is a fiber piece of dispersion compensating fiber. The piece of fiber is Raman pumped. The piece of fiber can be arranged as a first amplifier or at the outlet as second amplifier.

Figure 5 shows the diagrammatic structure of the Raman-amplifying DCF.

The signal light Pᵢₙ is launched into the DCF 10. Pump light from the pump light sources 6 is injected into the DCF 10 via wavelength-dependent couplers. In this connection, two pump light sources are used in this diagram, pumping taking place both in and against the direction of propagation. In an other embodiment the pumping takes place the other way around. The amplified signal Pₒᵤₜ leaves the DCF 10. The wavelengths of the pump sources are approximately 100 nm below the signal wavelengths (1500 nm region) of the wavelength-division multiplex.

In a WDM network, the Raman-pumped DCF is pumped by a plurality of pump sources and therefore specifically adjusted to the requirements of the amplifier unit. The choice of the pump light sources for the Raman amplifier makes it possible to configure the amplification spectrum in such a way that the Raman-pumped DCF corrects and optimizes the amplification spectrum of the amplifiers. This are in one embodiment the EDFAs in the line in another preferred embodiment at least on of the amplifiers is the Raman pumped dispersion compensating fiber.
In another embodiment at least on of the amplifiers are Raman amplifiers.

The flat amplification profiles important for the WDM transmission network are then achieved over the entire wavelength range.

## Claims

1. Amplifier unit (1) for a wavelength-division multiplex transmission system having a first optical amplifier (2), a second optical amplifier (3) and a connection (10) present between the amplifiers, and also a fiber section (5) made of a dispersion-compensating fiber, the dispersion-compensating fiber (5) being pumped by at least one pump light source (6) and being used as Raman amplifier (5), **characterized in that** the optical amplification of the dispersion-compensating fiber (5) overcompensates for the optical loss of the connection (10) between the amplifiers.

2. Amplifier unit (1) according to claim 1, **characterized in that** at least the first amplifier (2) is the dispersion-compensating fiber (5) used as an Roman amplifier.

3. Amplifier unit according to Claim 1, **characterized in that** the pump light sources (6) for the dispersion-compensating fiber (5) is adjusted in such a way that the amplification curve of the amplifiers (2, 3) and of the Raman amplifier (5) is smoothed in its entirety.

4. Amplification unit according to Claim 1, **characterized in that** the optical loss in the connection is generated by an optical add-drop module (4).

5. Amplifier unit according to Claim 1, **characterized in that** the dispersion-compensating fiber is incorporated at the input end upstream of the first optical amplifier (2).

6. Amplifier unit according to Claim 1, **characterized in that** the dispersion-compensating fiber is incorporated upstream of the second optical amplifier (3).

7. Method for amplifying optical signals for transmission over a glass-fiber transmission link, the signal entering from the transmission link traversing a first optical amplifier, the amplified signal traversing an add-drop module and then being compensated by a dispersion-compensating fiber and simultaneously amplified using the Raman effect in order then to traverse a second optical amplifier.

8. Method for amplifying optical signals for transmission over a glass-fiber transmission link, the signal entering from the transmission link being compensated by means of a dispersion-compensating fiber and being amplified at the same time using the stimulated Raman effect and traversing a first optical amplifier, the amplified signal traversing an add-drop module in order subsequently to traverse a second optical amplifier.

9. Method according to Claim 7 or 8, **characterized in that** the Raman emission of the dispersion-compensating fiber is controlled by adjusting the pump light in such a way that the amplification curve of the amplifier module is smoothed.
